# EUROPEAN PATENT SPECIFICATION

(11) **EP 3 936 279 B1**
(45) Date of publication and mention of the grant of the patent: **06.05.2026**
(21) Application number: 20767252.8
(22) Date of filing: 04.03.2020
(51) Int. Cl.: B23Q 11/00, B23Q 11/10, B23Q 11/14

(54) **CUTTING FLUID TANK, MACHINE TOOL AND MACHINE TOOL SYSTEM**
SCHNEIDFLÜSSIGKEITSBEHÄLTER, WERKZEUGMASCHINE UND WERKZEUGMASCHINENSYSTEM
RÉSERVOIR DE FLUIDE DE COUPE, MACHINE-OUTIL ET SYSTÈME DE MACHINE-OUTIL

(30) Priority: 05.03.2019 JP 2019039763
(43) Date of publication of application: 12.01.2022
(73) Proprietor: Citizen Watch Co., Ltd., Nishitokyo-shi, Tokyo 188-8511 (JP); Citizen Machinery Co., Ltd., Nagano 389-0206 (JP)
(72) Inventor: KANNO, Tsuyoshi, Nagano 389-0206 (JP)
(74) Representative: Ricker, Mathias
(86) International application number: PCT/JP2020/009248
(87) International publication number: WO 2020/179841

(56) References cited:
- EP-A1- 0 881 033
- JP-A- 2000 135 640
- JP-A- 2000 135 651
- JP-A- 2000 135 651
- JP-A- 2011 031 329
- JP-A- 2011 031 329

## Description

### FIELD

The disclosure relates to a cutting fluid tank, a machine tool and a machine tool system.

### BACKGROUND

A cutting fluid tank is conventionally known in which cutting fluid used for cutting a workpiece by a machine tool is accommodated.

The JP 2000/135651 discloses a cutting liquid storage tank according to the preamble of claim 1. The inside of a tank is partitioned by a partition wall, and a mixing oil separating room; a mixing oil recovery room neighboring with the mixing oil separating room; a cutting liquid recovery room neighboring with the mixing oil separating room; and a cutting liquid storage room neighboring with the cutting liquid recovery room; are formed. By cutting a part of the partition walls, a mixing oil exhaust port to communicate the mixing oil separating room and the mixing oil recovery room; a recovery part to communicate the mixing oil separating room and the cutting liquid recovery room; and a cutting liquid exhaust port to communicate the cutting liquid recovery room and the cutting liquid storage room 40; are formed. The lubricating oil is recovered to the mixing oil recovery room, and only the cutting liquid can be stored in the cutting liquid storage room.

### SUMMARY

The cutting fluid in the cutting fluid tank is recovered to the cutting fluid tank, after supplied to a processing portion, when a workpiece is processed by the machine tool. Since a temperature of the processing portion of the workpiece is high during cutting processing, the processing portion is cooled by the cutting fluid. On the other hand, since a temperature of the cutting fluid is increased by cooling the processing portion of the workpiece, the cutting fluid at a predetermined temperature is flowed in the cutting fluid tank. Although a temperature of the machine tool affects processing accuracy thereof, and it is desirable that the temperature of the cutting fluid is kept constant, if the cutting fluid is recovered from different recovery positions, the temperature of the cutting fluid is different to each other and the processing accuracy may be adversely affected. Therefore, an object of the present disclosure is to provide a cutting fluid tank for a machine tool capable of recovering the cutting fluid from different recovery positions, with suppressing the temperature difference of the cutting fluid during processing.

In order to achieve the above object, a cutting fluid tank according to the embodiment configured to recover cutting fluid from a machine tool includes a first parallel passage and a second parallel passage configured to recover the cutting fluid discharged from the machine tool and parallelly arranged to each other, and a communication passage configured to communicate the first parallel passage and the second parallel passage at ends of the first parallel passage and the second parallel passage, wherein the cutting fluid tank flows the cutting fluid through the first parallel passage and the second parallel passage in opposite directions to each other, and supplies the cutting fluid from the end of the second parallel passage to the machine tool, two inflow and outflow portions are adjacently arranged configured to flow the recovered cutting fluid to the first parallel passage, and each of inflow and outflow portions formed so as to flow the cutting fluid from different direction to each other, and flow the cutting fluid to the first parallel passage.

Further, the cutting fluid tank according to the embodiment further includes two receivers configured to receive the cutting fluid, wherein one of the receivers is disposed so as to face the first parallel passage across the second parallel passage, and the other of receivers is disposed at the opposite position to the communication passage, the cutting fluid flows from a direction intersecting the first parallel passage when the cutting fluid flows from one of the receivers to one of the inflow and outflow portions, and the cutting fluid flows from a direction along the first parallel passage when the cutting fluid flows from the other of the receivers to the other of the inflow and outflow portions.

Further, it is preferable for the cutting fluid tank according to the embodiment that the cutting fluid tank according to the embodiment further includes a first conveyor mounter configured to mount a conveyor which separates cutting chips contained in the cutting fluid from the cutting fluid, conveys the cutting chips, and supplies the cutting fluid to the receiver, a second conveyor mounter configured to mount the conveyor in a direction different from a direction mounted by the first conveyor mounter, wherein the cutting fluid is supplied to one of the receivers from the conveyor, when the conveyor is mounted on the first conveyor mounter, and the cutting fluid is supplied to the other of receivers from the conveyor, when the conveyor is mounted on the second conveyor mounter.

Further, it is preferable for the cutting fluid tank according to the embodiment that a first layer on which the first conveyor mounter and the second conveyor mounter are provided, and a second layer disposed below the first layer and on which the first parallel passage, the second parallel passage, and the communication passage are provided.

Further, it is preferable for the cutting fluid tank according to the embodiment that one of the receivers flows the cutting fluid to one of the inflow and outflow portions through a dam provided on the first layer so as to intersect the second parallel passage.

Further, the machine tool according to the embodiment incudes a cutting fluid tank configured to accommodate cutting fluid by recovering the cutting fluid supplied toward the vicinity of the processing position during processing of a workpiece by the tool of the machine tool, and a pump configured to pump the cutting fluid to a supplier configured to supply the cutting fluid accommodated in the cutting fluid tank toward the vicinity of the machining position, wherein the cutting fluid tank configured to recover the cutting fluid from a machine tool, including the first parallel passage and the second parallel passage configured to recover the cutting fluid discharged from the machine tool and parallelly arranged to each other, and a communication passage configured to communicate the first parallel passage and the second parallel passage at ends of the first parallel passage and the second parallel passage, wherein the cutting fluid tank flows the cutting fluid through the first parallel passage and the second parallel passage in opposite directions to each other, and supplies the cutting fluid from the end of the second parallel passage to the machine tool, two inflow and outflow portions are adjacently arranged configured to flow the recovered cutting fluid to the first parallel passage, and each of inflow and outflow portions formed so as to flow the cutting fluid from different direction to each other, and flow the cutting fluid to the first parallel passage, wherein the cutting fluid tank further comprises two receivers configured to receive the cutting fluid, wherein one of the receivers is disposed so as to face the first parallel passage across the second parallel passage, and the other of receivers is disposed at the opposite position to the communication passage, and the cutting fluid flows from a direction intersecting the first parallel passage when the cutting fluid flows from one of the receivers to one of the inflow and outflow portions, and the cutting fluid flows from a direction along the first parallel passage when the cutting fluid flows from the other of the receivers to the other of the inflow and outflow portions.

Further, the machine tool system according to the embodiment includes a machine tool configured to cut a workpiece by a tool, and a conveyor configured to convey cutting chips generated from the workpiece cut by the tool, wherein machine tool including a cutting fluid tank configured to accommodate cutting fluid by recovering the cutting fluid supplied toward the vicinity of the processing position during processing of a workpiece by the tool of the machine tool, and a pump configured to pump the cutting fluid to the supplier configured to supply the cutting fluid accommodated in the cutting fluid tank toward the vicinity of the machining position, wherein the cutting fluid tank configured to recover the cutting fluid from a machine tool, including a first parallel passage and a second parallel passage configured to recover the cutting fluid discharged from the machine tool and parallelly arranged to each other, and a communication passage configured to communicate the first parallel passage and the second parallel passage at ends of the first parallel passage and the second parallel passage, wherein the cutting fluid tank flows the cutting fluid through the first parallel passage and the second parallel passage in opposite directions to each other, and supplies the cutting fluid from the end of the second parallel passage to the machine tool, two inflow and outflow portions are adjacently arranged configured to flow the recovered cutting fluid to the first parallel passage, and each of inflow and outflow portions formed so as to flow the cutting fluid from different direction to each other, and flow the cutting fluid to the first parallel passage, wherein the cutting fluid tank further comprises two receivers configured to receive the cutting fluid, wherein one of the receivers is disposed so as to face the first parallel passage across the second parallel passage, and the other of receivers is disposed at the opposite position to the communication passage, and the cutting fluid flows from a direction intersecting the first parallel passage when the cutting fluid flows from one of the receivers to one of the inflow and outflow portions, and the cutting fluid flows from a direction along the first parallel passage when the cutting fluid flows from the other of the receivers to the other of the inflow and outflow portions.

The cutting fluid tank for machine tool according to the embodiment, for example, a temperature difference between the temperature of the cutting fluid when the chip conveyor is disposed on the side surface and that of the cutting fluid when the chip conveyor is disposed on the rear side may be suppressed. The machine tool according to the embodiment may prevent adverse effects on machining accuracy by the temperature difference of the cutting fluid, since the machine tool may recovered from different recovery positions while the temperature difference between a temperature of the cutting fluid when the chip conveyor is disposed on the side surface and the temperature of the cutting fluid when the chip conveyor is disposed on the rear is suppressed.

### BRIEF DESCRIPTION OF THE DRAWINGS

Fig. 1 is a diagram illustrating a first aspect of a machine tool system including a machine tool according to an embodiment and a chip conveyor inserted into the rear surface of the machine tool;
Fig. 2A is a plan view of the machine tool system shown in Fig. 1, and Fig. 2B is a front view of the machine tool system shown in Fig. 1;
Fig. 3 is a diagram illustrating a second aspect of a machine tool system including a machine tool according to an embodiment and a chip conveyor inserted into a side surface of the machine tool;
Fig. 4A is a perspective view showing a main part along a line C-C of Fig. 2B in cross section, and Fig. 4B is a portion perspective view of Fig. 4A;
Fig. 5 is a sectional view along a line C-C of Fig. 2B;
Fig. 6A is a sectional view along a line E-E in Fig. 5, and Fig. 6B is a sectional view along a line F-F in Fig. 5;
Fig. 7 is a perspective view along a line D-D in Fig. 2B; and
Fig. 8 is a sectional view along a line D-D in Fig. 2B.

### DESCRIPTION OF EMBODIMENTS

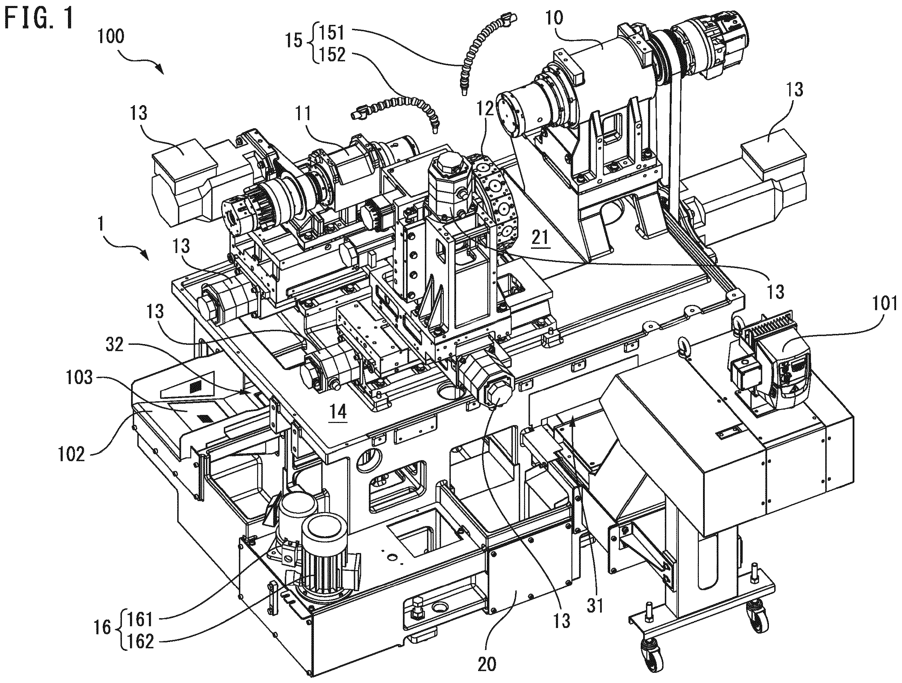

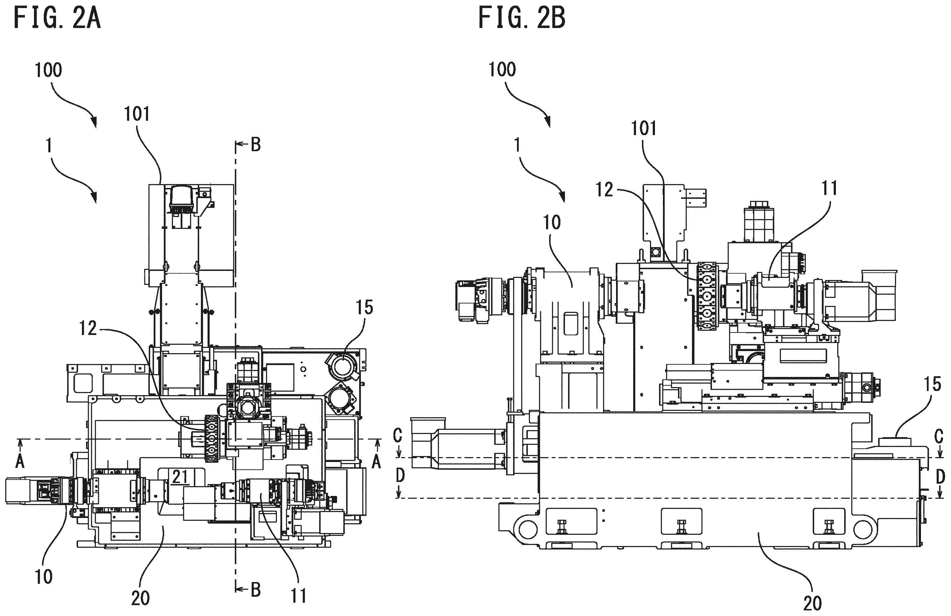

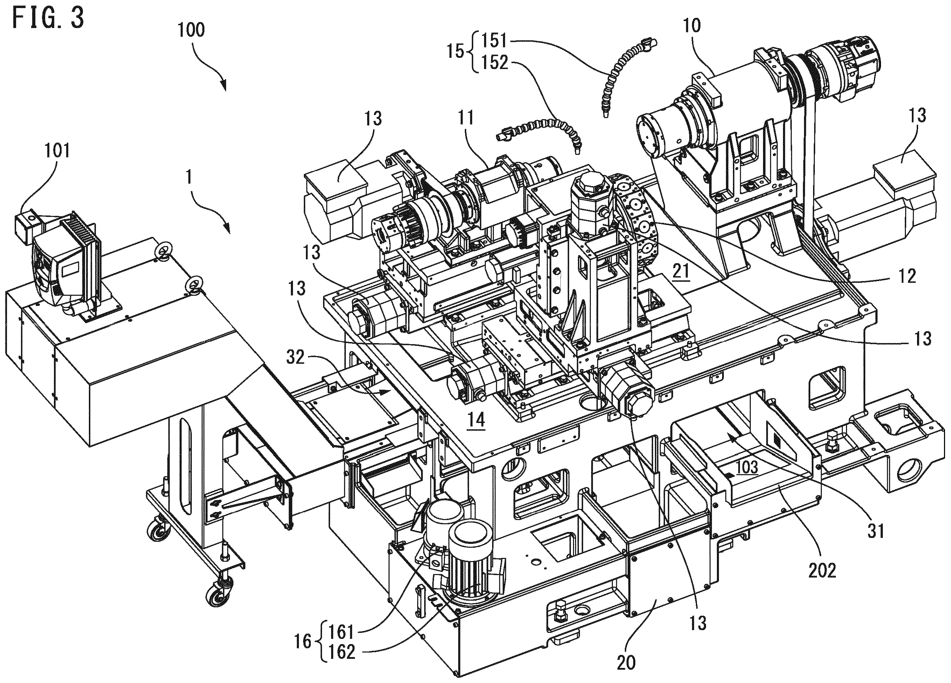

Fig. 1 is a diagram illustrating a first aspect of a machine tool system including a machine tool according to an embodiment and a chip conveyor inserted into the rear surface of the machine tool. Fig. 2A is a plan view of the machine tool system shown in Fig. 1, and Fig. 2B is a front view of the machine tool system shown in Fig. 1. Fig. 3 is a diagram illustrating a second aspect of a machine tool system including a machine tool according to an embodiment and a chip conveyor inserted into a side surface of the machine tool.

The machine tool system 100 includes a machine tool 1 and a chip conveyor 101. A front main spindle 10, a rear main spindle 11, a tool rest 12 and etc., are mounted on the bed 14 of the machine tool 1, and in the machine tool 1, a workpiece rotatably held by the front main spindle 10 or the rear main spindle 11 is cut by a tool held by the tool rest 12 with supplying cutting fluid. The front main spindle 10 and the rear main spindle 11 are work holders configured to hold a workpiece, and the tool rest 12 is a tool holder configured to hold a tool configured to cut a workpiece.

The machine tool 1 includes a supplier 15 configured to supply the cutting fluid, a pump 16 configured to pump the cutting fluid to the supplier 15, and a cutting fluid tank 20 configured to accommodate the cutting fluid. The bed 14 is provided on the cutting fluid tank 20. The supplier 15 includes a first supplier 151 and a second supplier 152. The first supplier 151 supplies the cutting fluid toward the vicinity of the cutting position where the workpiece held by the front main spindle 10 is cut. The second supplier 152 supplies the cutting fluid toward the vicinity of the cutting position where the workpiece held by the rear main spindle 11 is cut.

The pump 16 includes a first pump 161 and a second pump 162, and may supply the cutting fluid by the first pump 161 or the second pump 162 with changing oil pressure.

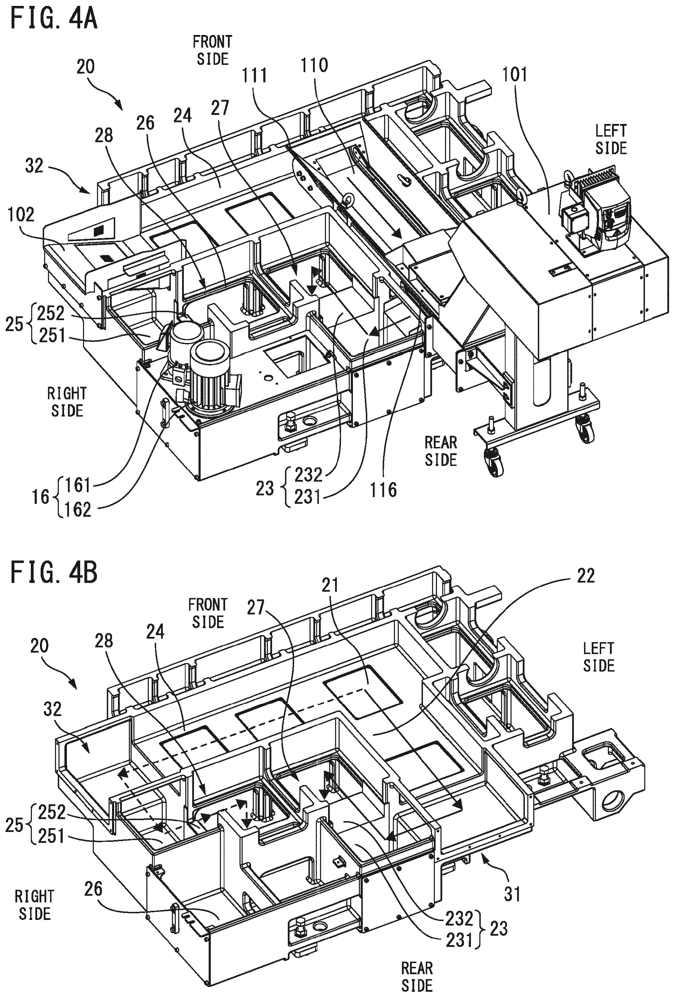

The chip conveyor 101 is disposed by inserted into a first insertion port 31 disposed on the rear side of the machine tool 1 of the cutting fluid tank 20 as shown in Fig. 1, or inserted into a second insertion port 32 disposed on the right side of the machine tool 1 of the cutting fluid tank 20 as shown in Fig. 3. The cutting fluid supplied toward the vicinity of the cutting position of the front main spindle 10 or the rear main spindle 11 is discharged to the chip conveyor 101, and the cutting fluid containing cutting chips generated during cutting process is recovered to the cutting fluid tank 20 through the chip conveyor 101. As shown in FIG. 4, the chip conveyor 101 is a conveyor configured to receive the cutting fluid containing the cutting chips by a first conveying unit 111, separate the cutting chips contained in the cutting fluid from the cutting fluid, convey the cutting chips to the outside of the machine tool 1, and discharge the cutting fluid from which the cutting fluid chips are separated. Since the structure of the chip conveyor 101 is conventionally known, a detailed description thereof will be omitted.

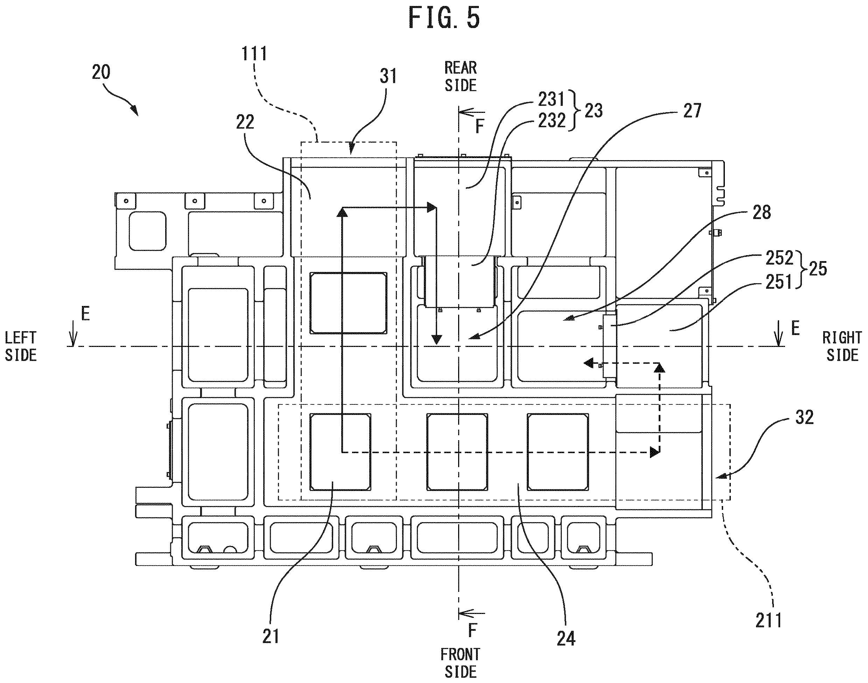

Fig. 4A is a perspective view showing a main part along a line C-C of Fig. 2B in cross section, and Fig. 4B is a portion perspective view of Fig. 4A. Fig. 5 is a sectional view along a line C-C of Fig. 2B. In Figs. 4A, 4B and 5, the solid line arrow indicates passages through which the cutting fluid passes when the first conveying unit 111 of the chip conveyor 101 is inserted into the first insertion port 31. The broken line arrow indicates passages through which the cutting fluid passes when the first conveying unit 111 of the chip conveyor 101 is inserted into the second insertion port 32.

The cutting fluid tank 20 is provided with two layers including a top layer and a bottom layer, and a first conveyor mounter 22 constituting a groove extending toward the rear side of the machine tool 1 and a second conveyor mounter 24 constituting a groove extending toward the right side of the machine tool 1 are provided on the first layer. The first conveyor mounter 22 and the second conveyor mounter 24 overlaps at a substantially vertical lower position of a gap between the front main spindle 10 and the rear main spindle 11. The overlapping portion is a collector 21 configured to receive the cutting fluid containing the cutting chips generated during cutting process on the front main spindle 10 or the rear main spindle 11.

When the first conveying unit 111 of the chip conveyor 101 is inserted from the first insertion port 31, the first conveying unit 111 is mounted to the inside of the first conveyor mounting unit 22. When the first conveying unit 111 of the chip conveyor 101 is inserted from the second insertion port 32, the first conveying unit 111 is mounted to the inside of the first conveyor mounting unit 22.

A first guide passage 23 is provided parallel to the first conveyor mounter 22. The first guide passage 23 is separated from the first conveyor mounter 22 and the second conveyor mounter 24 by walls. The first guide passage 23 communicates with the end of the rear side of the first conveyor mounter 22 through an opening of a portion of the wall between the first conveyor mounter 22 and the first guide passage 23. The first guide passage 23 includes a first reservoir 231 which is formed as a tank having a rectangular shape leading to the second layer below, and a first dam 232. A first connection hole 27 is formed between the first dam 232 and the second conveyor mounter 24, and opens toward the second layer. The first guide passage 23 is connected to a common guide passage 26 formed in the second layer through the first connection hole 27. The first reservoir 231 is arranged adjacent to the end of the rear side of the first conveyor mounter 22, and when the chip conveyor 101 is inserted into the first insertion port 31, and mounted to the first conveyor mounter 22, the first reservoir 231 functions as a receiver configured to receive the cutting fluid discharged from the cutting fluid discharge port configured to discharge the cutting fluid from which the cutting chips are separated on the chip conveyor 101. The first dam 232 separates the first layer from the second layer by closing between the side wall of the front side of the first reservoir 231 and the first connection hole 27, and flow the cutting fluid overflowing from the first reservoir 231 into the common guide passage 26 through the first connection hole 27. A portion of the common guide passage 26 passes through the first dam 232 so as to intersect below the first dam 232.

A second guide passage 25 is provided parallel to the second conveyor mounter 24. The second guide passage 25 is separated from the first conveyor mounter 22 and the second conveyor mounter 24 by walls. The second guide passage 25 communicates with the end portion of the right side of the second conveyor mounter 24 through an opening of a part of the wall between the second conveyor mounter 24 and the second guide passage 25. The second guide passage 25 includes a second reservoir 251 which is formed as a tank having a rectangle shape leading to the second layer below, and a second dam 252. A second connection hole 28 is formed adjacent to the first connection hole 27 between the second dam 252 and the first connection hole 27, and opens toward the second layer. The second guide passage 25 is connected to the common guide passage 26 through the second connection hole 28. The second reservoir 251 is disposed adjacent to the end of the right side of the second conveyor mounter 24, and when the chip conveyor 101 is inserted into the second insertion port 32, and mounted to the second conveyor mounter 24, the second reservoir 251 functions as a receiver configured to receive the cutting fluid from a discharge port configured to discharge the cutting fluid from which the cutting chips are separated on the chip conveyor 101. The second dam 252 forms a side wall of the left side of the second reservoir 251, flows the cutting fluid overflowing from the second reservoir 251 into the common guide passage 26 through the second connection hole 28.

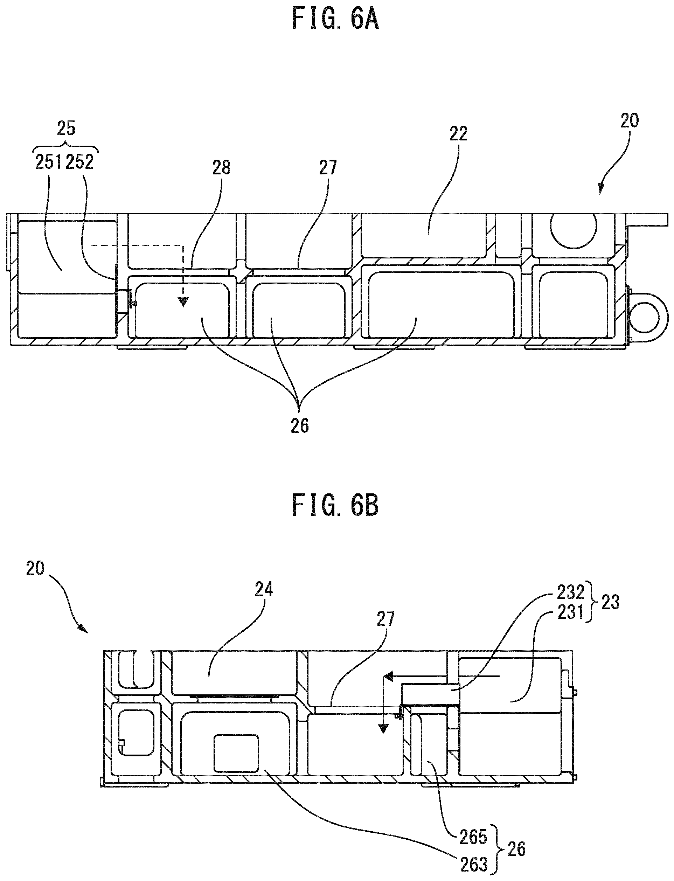

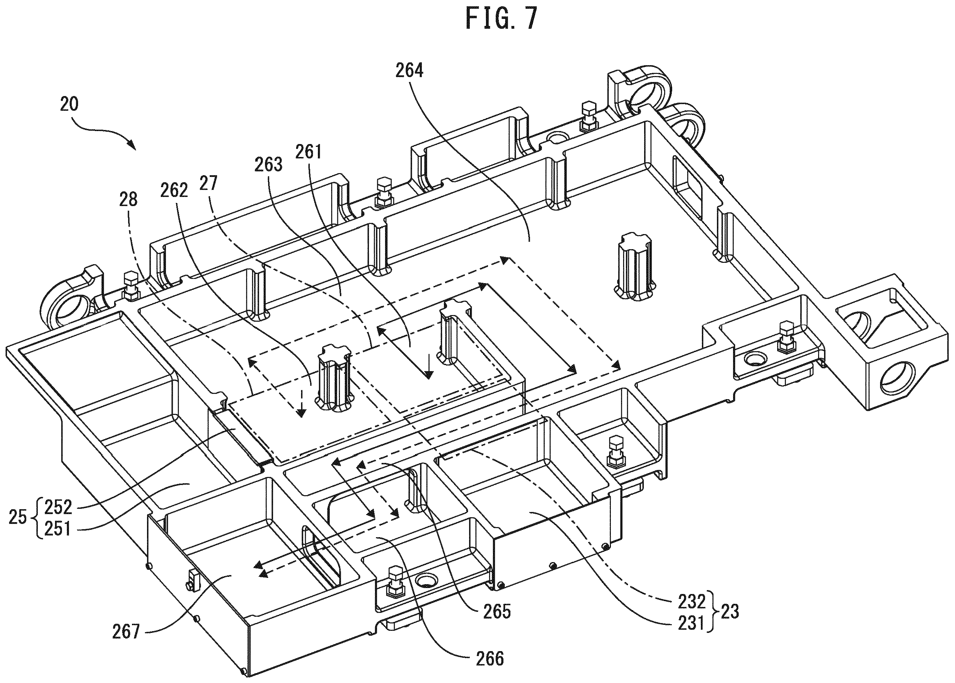

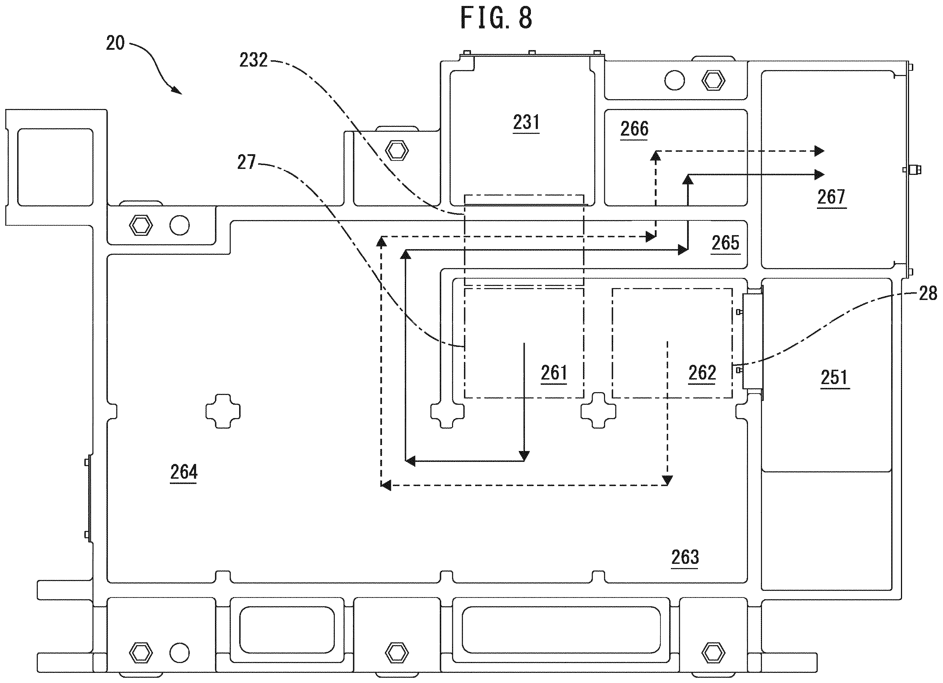

Fig. 6A is a sectional view along a line E-E in Fig. 5, Fig. 6B is a sectional view along a line F-F in Fig. 5, Fig. 7 is a perspective view along a line D-D in Fig. 2B, Fig. 8 is a sectional view along a line D-D in Fig. 2B.

The common guide passage 26 is provided on the second layer, and includes a first inflow and outflow portion 261, a second inflow and outflow portion 262, a first parallel passage 263, a communication passage 264, a second parallel passage 265, a connection reservoir 266, and a pump reservoir 267. The cutting fluid flowing into the common guide passage 26 through the first connection hole 27 or the second connection hole 28 sequentially passes through the first inflow and outflow portion 261 or the second inflow and outflow portion 262, the first parallel passage 263, the communication passage 264, the second parallel passage 265, and the connection reservoir 266, and reaches the pump reservoir 267. The cutting fluid in the first parallel passage 263 and the second parallel passage 265 flows in opposite directions to each other, reaches to the pump reservoir 267, and is supplied to the first pump 161 and the second pump 162.

The first inflow and outflow portion 261 is located below the first connection hole 27, and when the chip conveyor 101 is mounted to the first conveyor mounter 22, the cutting fluid flows to the first inflow and outflow portion 261 through the first guide passage 23 and the first connection hole 27. The second inflow and outflow portion 262 is located below the second connection hole 28 in conjunction with the first inflow and outflow portion 261, and when the chip conveyor 101 is mounted to the second conveyor mounter 24, the cutting fluid flows to the second inflow and outflow portion 262 through the second guide passage 25 and the second connection hole 28.

The first parallel passage 263 is at least partially located below the second conveyor mounter 24, and is parallel to both the first inflow and outflow portion 261 and the second inflow and outflow portion 262. When the chip conveyor 101 is mounted to the first conveyor mounter 22, the cutting fluid flows to the first parallel passage 263 from a direction intersecting with respect to the first parallel passage 263, and when the chip conveyor 101 is mounted to the second conveyor mounter 24, the cutting fluid flows to the first parallel passage 263 from a direction along the first parallel passage 263.

The communication passage 264 is at least partially located below the first conveyor mounter 22, and communicates at one ends of the first parallel passage 263 and the second parallel passage 265, and since capacity of the communication passage 264 is larger than that of the first reservoir 231 and the second reservoir 251, the cutting fluid is accumulated in the communication passage 264 longer time than in the first reservoir 231 and the second reservoir 251.

The second parallel passage 265 is provided parallel to the first inflow and outflow portion 261 and the second inflow and outflow portion 262, and in contact with the communication passage 264. The second parallel passage 265 is separated from the first reservoir 231, the first inflow and outflow portion 261 and the second inflow and outflow portion 262 by walls. The second parallel passage 265 is an fluid passage connecting between the communication passage 264 and the connection reservoir 266, and passes immediately below the first dam 232 of the first guide passage 23 so as to intersect the first dam 232.

The connection reservoir 266 is connected at the end of the second parallel passage 265. The connection reservoir 266 is separated from the first reservoir 231 by a wall. The connection reservoir 266 is further connected to the pump reservoir 267. The pump reservoir 267 is separated from the second reservoir 251 by a wall. The pump reservoir 267 is located below the pump 16, and supplies the cutting fluid to the suction port of the pump 16.

In the machine tool 1, the cutting fluid may be flowed through the same common guide passage 26 even when the chip conveyor 101 is mounted to any of the first conveyor mounter 22 and the second conveyor mounter 24. Since the cutting fluid discharged from the chip conveyor 101 flows into the first parallel passage 263 from the first inflow and outflow portion 261 or the second inflow and outflow portion 262 adjacently arranged to each other through the first reservoir 231 or the second reservoir 251 having a substantially similar length, even when the chip conveyor 101 is mounted to any of the first conveyor mounter 22 or the second conveyor mounter 24, a temperature difference of the cutting fluid due to the mounting position of the chip conveyor 101 may be reduced.

Further, since the machine tool 1 is formed such that the second parallel passage 265 of the common guide passage 26 passes immediately under the first dam 232 of the first guide passage 23, the length of the guide passage through which the cutting fluid flows may be longer without increasing the capacity of the cutting fluid tank 20. In the machine tool 1, since the length of the fluid conductive passage in which the cutting fluid is provided from the supplier 15 to the pump 16 which pumps the cutting fluid to the supplier 15 is lengthened, the temperature of the cutting fluid may be further reduced. The machine tool 1 reduces the temperature difference of the cutting fluid due to the mounted position of the chip conveyor 101, since the temperature of the cutting fluid is lowered to a similar temperature, even when the chip conveyor 101 is mounted to any of the first conveyor mounter 22 and the second conveyor mounter 24.

Further, in the machine tool 1, since the first guide passage 23 includes the first reservoir 231 and the second guide passage 25 includes the second reservoir 251 configured to accumulate the cutting fluid, the time for accumulating the cutting fluid may be increased. The machine tool 1 may improve the separability between the cutting chips and the cutting fluid, since the time for accumulating the cutting fluid in each of the first guide passage 23 and the second guide passage 25 may be increased, and therefore the cutting chips having a relatively larger size precipitate are settled out.

Further, in the machine tool 1, the common guide passage 26 flowing the cutting fluid through any of the guide passage of the first guide passage 23 or the second guide passage 25 includes reservoir having a capacity larger than that of the first reservoir 231 provided in the first guide passage 23 and the second reservoir 251 provided in the second guide passage 25. The machine tool 1 reduces the temperature difference of the cutting fluid due to the mounted position of the chip conveyor 101, regardless of the mounted position of the chip conveyor 101, since the common guide passage 26 includes a reservoir having capacity lager than that of the first reservoir 231 and the second reservoir 251.

The machine tool 1 is formed so that the chip conveyor 101 may be inserted into the first insertion port 31 formed on the rear side and the second insertion port 32 formed on the right side, the machine tool according to the embodiment may have least two insertion ports.

Further, in the machine tool 1, the common guide passage 26 is connected to the first conveyor mounter 22 and the second conveyor mounter 24 through the first guide passage 23 and the second guide passage 25, in the machine tool according to the embodiment, the common guide passage 26 may be directly connected to the first conveyor mounter 22 and the second conveyor mounter 24.

## Claims

1. A cutting fluid tank (20) configured to recover cutting fluid from a machine tool (1), comprising:
a first parallel passage (263) and a second parallel passage (265) configured to recover the cutting fluid discharged from the machine tool (1) and parallelly arranged to each other; and
a communication passage (264) configured to communicate the first parallel passage (263) and the second parallel passage (265) at ends of the first parallel passage (263) and the second parallel passage (265), wherein
the cutting fluid tank (20) flows the cutting fluid through the first parallel passage (263) and the second parallel passage (265) in opposite directions to each other, and supplies the cutting fluid from the end of the second parallel passage (265) to the machine tool (1),
two inflow and outflow portions (261, 262) are adjacently arranged configured to flow the recovered cutting fluid to the first parallel passage (263), and
each of inflow and outflow portions (261, 262) formed so as to flow the cutting fluid from different direction to each other, and flow the cutting fluid to the first parallel passage (263), **characterized in that** the cutting fluid tank (20) further comprises two receivers (231, 251) configured to receive the cutting fluid, wherein
one of the receivers (231) is disposed so as to face the first parallel passage (263) across the second parallel passage (265), and the other of receivers (251) is disposed at the opposite position to the communication passage (264), and
the cutting fluid flows from a direction intersecting the first parallel passage (263) when the cutting fluid flows from one of the receivers (231) to one of the inflow and outflow portions (261, 262), and the cutting fluid flows from a direction along the first parallel passage (263) when the cutting fluid flows from the other of the receivers (251) to the other of the inflow and outflow portions (261, 262).

2. The cutting fluid tank (20) according to claim 1, further comprising:
a first conveyor mounter (22) configured to mount a conveyor (101) which separates cutting chips contained in the cutting fluid from the cutting fluid, conveys the cutting chips, and supplies the cutting fluid to the receiver; and
a second conveyor mounter (24) configured to mount the conveyor (101) in a direction different from a direction mounted by the first conveyor mounter (22), wherein
the cutting fluid is supplied to one of the receivers (231, 251) from the conveyor (101), when the conveyor (101) is mounted on the first conveyor mounter (22), and the cutting fluid is supplied to the other of receivers (231, 251) from the conveyor (101), when the conveyor (101) is mounted on the second conveyor mounter (24).

3. The cutting fluid tank (20) according to claim 2, wherein
a first layer on which the first conveyor mounter (22) and the second conveyor mounter (24) are provided, and a second layer disposed below the first layer and on which the first parallel passage (263), the second parallel passage (265), and the communication passage (264) are provided.

4. The cutting fluid tank (20) according to claim 2, wherein
one of the receivers (231, 251) flows the cutting fluid to one of the inflow and outflow portions (261, 262) through a dam (232, 252) provided on the first layer so as to intersect the second parallel passage (265).

5. A machine tool (1) comprising:
a cutting fluid tank (20) configured to accommodate cutting fluid by recovering the cutting fluid supplied toward the vicinity of the processing position during processing of a workpiece by the tool of the machine tool (1); and
a pump (16) configured to pump the cutting fluid to a supplier (15) configured to supply the cutting fluid accommodated in the cutting fluid tank (20) toward the vicinity of the machining position, wherein the cutting fluid tank (20) configured to recover the cutting fluid from a machine tool (1), wherein the cutting fluid tank is according to claim 1.

6. A machine tool system (100) comprising:
a machine tool (1) configured to cut a workpiece by a tool; and
a conveyor (101) configured to convey cutting chips generated from the workpiece cut by the tool, wherein the machine tool (1) is according to claim 5.

## Patentansprüche

1. Schneidflüssigkeitstank (20), der zum Rückgewinnen von Schneidflüssigkeit aus einer Werkzeugmaschine (1) ausgestaltet ist und der aufweist:
einen ersten parallelen Durchgang (263) und einen zweiten parallelen Durchgang (265), die zum Rückgewinnen der aus der Werkzeugmaschine (1) ausgestoßenen Schneidflüssigkeit ausgestaltet und die parallel zueinander angeordnet sind, und
einen Verbindungsdurchgang (264), der ausgestaltet ist, um den ersten parallelen Durchgang (263) und den zweiten parallelen Durchgang (265) an den Enden des ersten parallelen Durchgangs (263) und des zweiten Durchgangs Kanals (265) zu verbinden, wobei
der Schneidflüssigkeitstank (20) die Schneidflüssigkeit durch den ersten parallelen Durchgang (263) und dem zweiten parallelen Durchgang (265) in entgegengesetzte Richtungen zueinander fließen lässt und die Schneidflüssigkeit von dem Ende des zweiten parallelen Durchgangs (265) zur Werkzeugmaschine (1) zuführt,
zwei Einström- und Ausströmabschnitte (261, 262) benachbart angeordnet sind, die ausgestaltet sind, um die zurückgewonnene Schneidflüssigkeit zu dem ersten parallelen Durchgang (263) fließen zu lassen, und
jeder der Einström- und Ausströmabschnitte (261, 262) so ausgebildet ist, dass er die Schneidflüssigkeit aus unterschiedlichen Richtungen zueinander fließen lässt und die Schneidflüssigkeit zu dem ersten parallelen Durchgang (263) fließen lässt, **dadurch gekennzeichnet, dass** der Schneidflüssigkeitstank (20) ferner zwei Auffangbehälter (231, 251) aufweist, die ausgestaltet sind, um die Schneidflüssigkeit aufzunehmen, wobei
einer der Auffangbehälter (231) so angeordnet ist, dass er dem ersten parallelen Durchgang (263) über den zweiten parallelen Durchgang (265) gegenüberliegt, und der andere der Auffangbehälter (251) an der dem Verbindungsdurchgang (264) gegenüberliegenden Position angeordnet ist, und
die Schneidflüssigkeit aus einer Richtung fließt, die den ersten parallelen Durchgang (263) schneidet, wenn die Schneidflüssigkeit aus einem der Auffangbehälter (231) zu einem der Einström- und Ausströmabschnitte (261, 262) fließt, und die Schneidflüssigkeit aus einer Richtung entlang des ersten parallelen Durchgangs (263) fließt, wenn die Schneidflüssigkeit aus dem anderen der Auffangbehälter (251) zu dem anderen der Einström- und Ausströmabschnitte (261, 262) fließt.

2. Schneidflüssigkeitstank (20) nach Anspruch 1, welcher ferner aufweist:
einen ersten Fördererhalter (22), der ausgestaltet ist, um einen Förderer (101) zu halten, das in der Schneidflüssigkeit enthaltene Späne von der Schneidflüssigkeit trennt, das Späne fördert und das die Schneidflüssigkeit dem Behälter zuführt, und
einen zweiten Fördererhalter (24), der ausgestaltet ist, um den Förderer (101) in einer anderen Richtung als der von dem ersten Fördererhalter (22) gehaltenen Richtung zu halten, wobei
die Schneidflüssigkeit von dem Förderer (101) zu einem der Auffangbehälter (231, 251) zugeführt wird, wenn der Förderer (101) auf dem ersten Fördererhalter (22) angebracht ist, und die Schneidflüssigkeit dem anderen der Behälter (231, 251) von dem Förderer (101) zugeführt wird, wenn der Förderer (101) auf dem zweiten Fördererhalter (24) angebracht ist.

3. Schneidflüssigkeitstank (20) nach Anspruch 2, wobei
eine erste Schicht, auf der der erste Fördererhalter (22) und der zweite Fördererhalter (24) vorgesehen sind, und eine zweite Schicht vorgesehen sind, die unterhalb der ersten Schicht angeordnet ist und auf der der erste parallele Durchgang (263), der zweite parallele Durchgang (265) und der Verbindungskanal (264) vorgesehen sind.

4. Schneidflüssigkeitstank (20) nach Anspruch 2, wobei
einer der Auffangbehälter (231, 251) die Schneidflüssigkeit durch einen Damm (232, 252), der auf der ersten Schicht vorgesehen ist, zu einem der Zu- und Abflussabschnitte (261, 262) so fließen lässt, dass er den zweiten parallelen Durchgang (265) schneidet.

5. Werkzeugmaschine (1), welche aufweist:
einen Schneidflüssigkeitstank (20), der ausgestaltet ist, um die Schneidflüssigkeit aufzunehmen, indem er die Schneidflüssigkeit zurückgewinnt, die während der Bearbeitung eines Werkstücks durch das Werkzeug der Werkzeugmaschine (1) in die Nähe der Bearbeitungsposition zugeführt wird, und
eine Pumpe (16), die ausgestaltet ist, um die Schneidflüssigkeit zu einer Zuführvorrichtung (15) zu pumpen, die ausgestaltet ist, um die in dem Schneidflüssigkeitstank (20) aufgenommene Schneidflüssigkeit in die Nähe der Bearbeitungsposition zuzuführen, wobei der Schneidflüssigkeitstank (20), der ausgestaltet ist, um die Schneidflüssigkeit aus einer Werkzeugmaschine (1) zurückzugewinnen, aufweist, der Schneidflüssigkeitstank gemäß Anspruch 1 ist.

6. Werkzeugmaschinensystem (100), welches aufweist:
eine Werkzeugmaschine (1), die ausgestaltet ist, um ein Werkstück mit einem Werkzeug zu schneiden, und
einen Förderer (101), der ausgestaltet ist, um von dem mit dem Werkzeug geschnittenen Werkstück erzeugte Späne zu fördern, wobei die Werkzeugmaschine (1) gemäß Anspruch 5 ist.

## Revendications

1. Réservoir de fluide de coupe (20) configuré pour récupérer un fluide de coupe d'une machine-outil (1), comprenant :
un premier passage parallèle (263) et un deuxième passage parallèle (265) configurés pour récupérer le fluide de coupe évacué de la machine-outil (1) et disposés parallèlement l'un à l'autre ; et
un passage de communication (264) configuré pour faire communiquer le premier passage parallèle (263) et le deuxième passage parallèle (265) au niveau d'extrémités du premier passage parallèle (263) et du deuxième passage parallèle (265), dans lequel
le réservoir de fluide de coupe (20) fait s'écouler le fluide de coupe à travers le premier passage parallèle (263) et le deuxième passage parallèle (265) dans des directions opposées l'une à l'autre, et alimente la machine-outil (1) avec le fluide de coupe depuis l'extrémité du deuxième passage parallèle (265),
deux zones de flux entrant et sortant (261, 262) sont agencées de manière adjacente et configurées pour faire s'écouler le fluide de coupe récupéré vers le premier passage parallèle (263), et
chacune des zones de flux entrant et sortant (261, 262) étant formées de manière à faire s'écouler le fluide de coupe à partir d'une direction différente pour chacune d'elles, et à faire s'écouler le fluide de coupe vers le premier passage parallèle (263),
**caractérisé en ce que** le réservoir de fluide de coupe (20) comprend en outre deux récepteurs (231, 251) configurés pour recevoir le fluide de coupe, dans lequel
l'un des récepteurs (231) est disposé en regard du premier passage parallèle (263) à travers le deuxième passage parallèle (265), et l'autre des récepteurs (251) est disposé à l'opposé du passage de communication (264), et
le fluide de coupe s'écoule selon une direction intersectant le premier passage parallèle (263) lorsque le fluide de coupe s'écoule depuis l'un des récepteurs (231) vers l'une des zones de flux entrant et sortant (261, 262), et le fluide de coupe s'écoule selon une direction le long du premier passage parallèle (263) lorsque le fluide de coupe s'écoule depuis l'autre des récepteurs (251) vers l'autre des zones de flux entrant et sortant (261, 262).

2. Réservoir de fluide de coupe (20) selon la revendication 1, comprenant en outre :
un premier dispositif de montage de convoyeur (22) configuré pour monter un convoyeur (101) qui sépare du fluide de coupe des copeaux de coupe contenus dans le fluide de coupe, convoie les copeaux de coupe et alimente le récepteur avec le fluide de coupe ; et
un deuxième dispositif de montage de convoyeur (24) configuré pour monter le convoyeur (101) dans une direction différente d'une direction de montage du premier dispositif de montage de convoyeur (22), dans lequel
le fluide de coupe est fourni à l'un des récepteurs (231, 251) à partir du convoyeur (101), lorsque le convoyeur (101) est monté sur le premier dispositif de montage de convoyeur (22), et le fluide de coupe est fourni à l'autre des récepteurs (231, 251) à partir du convoyeur (101), lorsque le convoyeur (101) est monté sur le deuxième dispositif de montage de convoyeur (24).

3. Réservoir de fluide de coupe (20) selon la revendication 2, comprenant
une première couche sur laquelle le premier dispositif de montage de convoyeur (22) et le deuxième dispositif de montage de convoyeur (24) sont disposés, et une deuxième couche disposée sous la première couche et sur laquelle le premier passage parallèle (263), le deuxième passage parallèle (265) et le passage de communication (264) sont disposés.

4. Réservoir de fluide de coupe (20) selon la revendication 2, dans lequel
l'un des récepteurs (231, 251) fait s'écouler le fluide de coupe vers l'une des zones de flux entrant et sortant (261, 262) à travers un élément de barrage (232, 252) disposé sur la première couche de manière à couper le deuxième passage parallèle (265).

5. Machine-outil (1) comprenant :
un réservoir de fluide de coupe (20) configuré pour recevoir un fluide de coupe en récupérant le fluide de coupe fourni à proximité de la position de traitement pendant le traitement d'une pièce par l'outil de la machine-outil (1) ; et
une pompe (16) configurée pour pomper le fluide de coupe vers un dispositif d'alimentation (15) configuré pour fournir le fluide de coupe reçu dans le réservoir de fluide de coupe (20) à proximité de la position d'usinage, dans lequel le réservoir de fluide de coupe (20) est configuré pour récupérer le fluide de coupe à partir d'une machine-outil (1), dans lequel le réservoir de fluide de coupe est selon la revendication 1.

6. Système de machine-outil (100) comprenant :
une machine-outil (1) configurée pour couper une pièce à l'aide d'un outil ; et
un convoyeur (101) configuré pour transporter des copeaux de coupe générés à partir de la pièce coupée par l'outil, dans lequel la machine-outil (1) est selon la revendication 5.
